# EUROPÄISCHE PATENTSCHRIFT

(11) **EP 2 258 529 B1**
(45) Veröffentlichungstag und Bekanntmachung des Hinweises auf die Patenterteilung: **15.04.2015**
(21) Anmeldenummer: 10163932.6
(22) Anmeldetag: 26.05.2010
(51) Int. Cl.: B29B 17/04, B02C 4/02, B02C 4/32

(54) **Gummi-Reaktivierungseinrichtung und -verfahren**
Rubber reactivation device and method
Dispositif et procédé de réactivation de caoutchouc

(30) Priorität: 05.06.2009 DE 102009025925
(43) Veröffentlichungstag der Anmeldung: 08.12.2010
(73) Patentinhaber: ANDRITZ MeWa GmbH, 75391 Gechingen (DE)
(72) Erfinder: Wabnig, Heimo, 71263, Weil der Stadt (DE)
(74) Vertreter: Abel, Thomas Mario

(56) Entgegenhaltungen:
- WO-A2-02/45930
- DE-C1- 4 425 049
- GB-A- 953 525
- JP-A- 2004 148 570
- US-A- 6 047 911
- DROZDOVSKII V F: "GRINDING OF RUBBER-CONTAINING WASTE MATERIALS AND PROPERTIES OF COMMUNUTED VULCANISATES" INTERNATIONAL POLYMER SCIENCE AND TECHNOLOGY, RAPRA TECHNOLOGY, SHREWABURY, GB, Bd. 20, Nr. 8, 1. Januar 1993 (1993-01-01) , Seiten T64-T70, XP000413778 ISSN: 0307-174X

## Beschreibung

Die Erfindung betrifft eine Gummi-Reaktivierungsmühle und ein Gummi-Reaktivierungsverfahren.

Zahlreiche technische Bemühungen richten sich auf die Verbesserung des Recyclings von Kautschuk und Gummi, insbesondere schwefelvernetzten Elastomeren wie beispielsweise Altgummi. Dieses fällt technisch in großem Maßstab beispielsweise in Form von Altreifen an. Es ist das Ziel vieler Bemühungen, das in den Altreifen oder anderen Gummiprodukten enthaltene Gummi zu verwerten. Ein besonderes Ziel ist dabei die Verwertung in qualitativ gleichwertigen Produkten. Dazu ist eine Devulkanisierung, also das Aufbrechen möglichst vieler Schwefelbrücken (C-S-C) des Altgummis erforderlich.

Die DE 602 15 210 T2 beschreibt das Recycling von Elastomeren durch Devulkanisierung. Dazu wird das zu devulkanisierende Elastomer zunächst in Pulverform überführt und dann unter Rühren auf eine Temperatur erhitzt, die unterhalb der Zersetzungstemperatur des Elastomers liegt. In das heiße Elastomerpulver wird Öl gegeben und mit diesem innig vermischt. Nach Abkühlung des Gemischs soll ein regeneriertes Elastomer erhalten werden, das ähnliche Eigenschaften wie ein entsprechendes neu hergestelltes Elastomer hat.

Die DE 10 2007 026 173 A1 schlägt zur Devulkanisierung von schwefelvernetzten Gummivulkanisaten die Verwendung von Dialkylpolysulfiden vor. Zur Durchführung des Verfahrens wird das flüssige Dialkylpolysulfid in Reinform oder mit anderen beispielsweise festen Regenerierungsmitteln als Paste oder feste Lösung mit gemahlenem Gummivulkanisat versetzt. Zur Zerkleinerung kann das zu regenerierende Gummivulkanisat auf einer kalten Walze zerkleinert werden, wobei die kalte Walze auf die zu zerkleinernden Kautschukteilchen hohe Scherkräfte ausübt. Die Druckschrift schlägt dazu Mischaggregate, wie Extruder, Innenmischer, Kneter oder Walzwerke vor.

Das von diesem Verfahren erzeugte Gummirecyclingmaterial enthält nach dem Devulkanisieren das eingesetzte Regenerierungsmittel oder dessen Reaktionsprodukte.

Aus der EP 1 172 147 A1 ist eine Vorrichtung zum Pulverisieren von Gummigranulat bekannt, die zwei zueinander parallele gegenläufig rotierende Wellen mit darauf angeordneten Scheiben aufweist. Die Scheiben sind im Querschnitt keilförmig ausgebildet. Die Scheibengruppen der beiden Wellen greifen unter Ausbildung eines engen zickzackförmigen Spalts ineinander. Wenigstens eine der beiden Scheibengruppen schwingt quer zur Rotationsachse. Durch diese Maßnahme soll das zwischen die Scheiben gelangende Granulat mechanisch sehr stark belastet werden. Es soll zum Auseinanderzerren der Molekülschichten innerhalb des einzelnen Granulatkorns kommen, wobei die Schubspannungen gegebenenfalls die intermolekularen Kräfte zwischen den Elastomerschichten bzw. Fasern überwinden sollen. Außerdem sollen in dem gummielastischen Granulat Kavitationsstörungen entstehen, die zur Erosion und Materialzerstörung beim Zusammenfallen der Kavitationsblasen und zum Überschreiten der Zerreißbeanspruchung führen.

Die Scheibenoberflächen sind mit einer hitzebeständigen rauen Oberfläche ausgestattet. Die Maschine soll ein feines und aktives, d.h. erneut vulkanisierbares Pulver liefern.

Aus der DE 44 25 049 C1 ist die Reaktivierung von Gummi durch Walzkalandrierung bekannt. Es wird dazu ein Walzwerk mit einem Spalt von 0,1 bis 1 mm genutzt.

Die US 6 047 911 beschreibt ebenfalls die Reaktivierung von Gummi mittels glatter Walzen, die einen engen Spalt definieren, durch den das Material geführt wird.

In diesem Zusammenhang schlägt die GB 953 525 vor, die Walzen eines Kalanders mit parallelen Nuten zu versehen, die einen Winkel zur Axialrichtung der einzelnen Walze haben.

Auch die WO 02/45930 schlägt die Gummizerkleinerung und Reaktivierung mittels Walzen vor, wobei diese zwischen einander einen Spalt von 0 bis 1 mm, vorzugsweise 0,7 mm, +/- 0,1 mm einschließen.

Die Patentschrift US 2009/0114749 A1 beschreibt insbesondere in der Figur 8 und in den Absätzen 26, 30 und 32 eine Gummimühle mit einer zur Zufuhr von Gummiteilen eingerichteten Materialzuführvorrichtung, mit zwei rotierenden in einem Gestell mittels Lager drehbar gelagerten Walzen, von denen wenigstens eine durch eine Antriebseinrichtung drehend angetrieben ist und mit der anderen Walze ohne Materialdurchlauf in Berührung steht, wobei zumindest eine der beiden Walzen eine raue oder genarbte Oberfläche aufweist, indem wenigstens eine der Walzen eine Oberfläche mit Erhebungen und Vertiefungen aufweist, die größer als 1/10 mm sind, wobei die Lager der betreffenden Walze auf die andere Walze hin und von dieser weg verschiebbar gelagert sind, so dass die Walzen bei fehlender Materialzufuhr ohne Vorspannung aneinander wenigstens punktuell anliegen oder einen ganz engen Spalt von z.B. wenigen 1/100 mm oder wenigen 1/10 mm miteinander festlegen.

Es ist Aufgabe der Erfindung ein mengenmäßig leistungsfähiges vereinfachtes Verfahren und eine vereinfachte Vorrichtung zum Devulkanisieren von Gummi anzugeben.

Diese Erfindung wird mit der Gummi-Reaktivierungsmühle nach Anspruch 1 sowie dem Reaktivierungsverfahren nach Anspruch 8 gelöst:
Die erfindungsgemäße Gummireaktivierungsmühle weist mindestens zwei drehbar gelagerte, vorzugsweise zylindrische Walzen auf, die vorzugsweise gegenläufig rotieren. Zumindest eine der beiden Walzen, vorzugsweise beide, sind mit einer Drehantriebsvorrichtung verbunden. Die beiden Walzen sind auf einen sehr engen Spalt eingestellt, so dass sie einander im gummimaterialfreien Zustand entlang einer Linie oder entlang dieser Linie zumindest stellenweise berühren. Letzteres ist der Fall, wenn zumindest eine der Mantelflächen der Walzen nicht exakt zylindrisch ist, sonder an ihrer Mantelfläche kleinere Erhebungen und Ausnehmungen aufweist.
Zum Gummirecycling und zur Reaktivierung des Gummis werden die betreffenden Gummiteile vorzugsweise wiederholt zwischen den Walzen durch den engen Spalt hindurchgeführt. Dabei werden die Gummiteile zerquetscht. Durch die entstehenden Scherspannungen zerreist und zerfällt das Gummimaterial in kleine Teile. Entlang der Oberfläche dieser Teile und entlang ihrer zahlreichen inneren Risse sind die vorhandenen Schwefelbrücken (C-S-C-Verbindungen) unterbrochen. Dies entspricht einer Devulkanisierung. Es entsteht aktiviertes Mehl mit einer geringen Korngröße von vorzugsweise weniger als 1,4 mm Korngröße. Besonders gut arbeiten die Walzenmühle und das Aktivierungsverfahren, wenn der Gummi-Reaktivierungsmühle eine Gummikorngröße von mindestens 2mm, typischerweise 4 mm zugeführt werden. Das Größtkorn kann auch einige Zentimeter groß sein. Durch die Mindestkorngröße von 2 mm wird sichergestellt, dass bei der Zerkleinerung auf ein Größtkorn von z.B. höchstens 1,4 mm ein ausreichendes Quantum mechanischer Arbeit in jedes Gummikorn eingeleitet wird. Dies Arbeit in Form von Scherung, Zug und Druck stellt sicher, dass jedes Korn aktiviert wurde.

Es zeigt sich, dass sich mit der Gummi-Reaktivierungsmühle ohne Zusatz von Devulkanisierungsmittel ein hoher Reaktivierungsgrad erreichen lässt. Die Gummiteile werden dem Reaktivierungsverfahren somit vorzugsweise "trocken", d.h. ohne Öl oder sonstiges flüssiges, pastöses oder auch pulveriges oder stückiges Deaktivierungshilfsmittel zugeführt. Falls gewünscht, können den Gummiteilen während des Reaktivierungsverfahrens jedoch andere, die Reaktivierung nicht beeinflussende Stoffe, wie beispielsweise Füllstoffe oder dergleichen beigegeben werden. Vorzugsweise wird jedoch auch darauf verzichtet.

Die Reaktivierung ist besonders effizient, wenn die beiden Walzen mit unterschiedlichen Umfangsgeschwindigkeiten angetrieben werden. Vorzugsweise liegt das Verhältnis der Umfangsgeschwindigkeiten im Bereich von 1:30 bis 15:30, vorzugsweise beträgt es 5:30. Dieses Verhältnis kann zeitlich konstant sein. Es ist auch möglich, seinen Wert kontinuierlich oder von Zeit zu Zeit, bei chargenweisem Betrieb z.B. von Durchlauf zu Durchlauf zu ändern. Z.B. kann die Drehzahl einer Walze konstant sein, während die Drehzahl der anderen Walze variiert.

Wenn beide Walzen den gleichen Durchmesser haben, entspricht das Verhältnis der Umfangsgeschwindigkeiten dem Drehzahlverhältnis. Vorzugsweise drehen die Walzen gegensinnig, d.h. sie fördern in gleicher Richtung.

Erfindungsgemäß wird vorgesehen, dass zumindest eine der beiden Walzen eine raue oder genarbte Oberfläche aufweist. Vorzugsweise können beide Walzen eine solche raue oder genarbte Oberfläche aufweisen. Die Rauheit oder Narbung liegt im Bereich von 1/10 bis 1 mm. Es handelt sich dabei um nicht scharfkantige Strukturen. Die an der Oberfläche als "Rauheit" oder "Narbung" vorhandenen Erhebungen und Vertiefungen sind vorzugsweise gerundet. Während sie in Radialrichtung 1/10 bis 1 mm groß sein können, können sie in Umfangsrichtung und Axialrichtung auch größere Abmessungen haben. Vorzugsweise weisen die Walzen an ihren Oberflächen eine aufgeschweißte Schicht auf, wobei sich die Erhebungen und Vertiefungen im Rahmen des Schweißprozesses ergeben können. Bei der Schicht kann es sich um eine Stahlschicht oder eine Schicht einer Nickelbasislegierung handeln.

Die Walzen sind auf einen Walzenabstand von 0 mm eingestellt. Beide Walzen sind in Radialrichtung federnd gelagert. Dabei werden die Lager der betreffenden Walze auf die andere Walze hin und von dieser weg verschiebbar gelagert. Eine harte Druckfeder, beispielsweise ein Tellerfederpaket spannt dann jeweils die betreffenden Lager gegen einen Anschlag vor, so dass die Walzen bei fehlender Materialzufuhr ohne Vorspannung aneinander anliegen oder einen ganz engen Spalt von z.B. wenigen 1/100 mm oder wenigen 1/10 mm miteinander festlegen.

Es hat sich als vorteilhaft herausgestellt, das zu zerkleinernde Material während der Verkleinerung zu kühlen. Dies kann durch ein Kühlfluid geschehen, das das Gummimaterial oder zumindest eine der beiden Walzen (oder auch beide) von innen und/oder außen trifft oder umspült oder durchspült. Das Kühlfluid kann gasförmig oder flüssig sein. Wird ein flüssiges Kühlfluid verwendet, wird es bevorzugt, es in einem geschlossenen Kreislauf zu führen, der beispielsweise zumindest eine der beiden Walzen einbezieht. Zum Beispiel kann das Kühlfluid durch den Walzeninnenraum geführt werden. Wird ein kühlendes Gas angewendet, kann dieses auch vor, während oder unmittelbar nach der Zerkleinerung direkt mit dem Gummigranulat in Verbindung gebracht werden.

Weitere Einzelheiten vorteilhafter Ausführungsformen der Erfindung ergeben sich aus der Zeichnung, der Figurenbeschreibung oder Unteransprüchen. Die Zeichnung beschränkt sich auf wesentliche Details der Erfindung und sonstiger Gegebenheiten. Die Zeichnung offenbart weitere Details und ist ergänzend heranzuziehen. Es zeigen:
Fig. 1 die erfindungsgemäßen Gummireaktivierungsmühle in schematischer Ansicht zur Verdeutlichung des Reaktivierungsverfahrens,
Fig. 2 die Überführung eines Gummiabfallstücks in kleineres Gummikorn in schematisierter Darstellung,
Fig. 3 ein Gummikorn in schematisierter Ansicht,
Fig. 4 eine Gummireaktivierungsmühle in vereinfachter Stirnansicht und
Fig. 5 ein in Fig. 4 markiertes Detail der Gummi-Reaktivierungsmühle in anderer Darstellungsgröße.

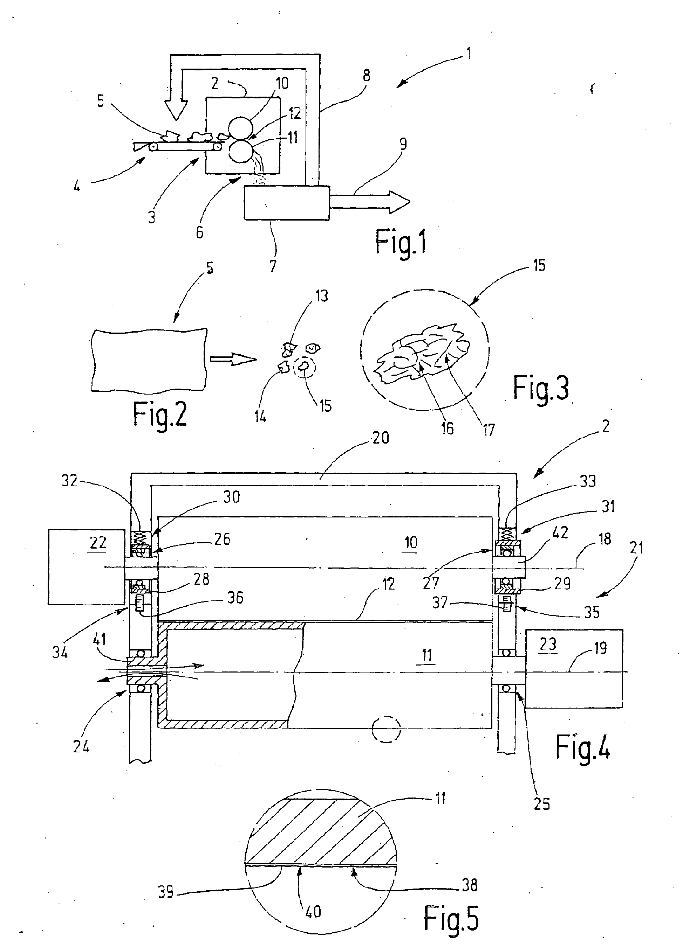

Die in Fig. 1 veranschaulichte Gummirecyclingeinrichtung 1 enthält eine Gummireaktivierungsmühle 2, der in einen Materialstrom eingebunden ist. An seinem Eingang 3 ist eine Materialzuführungseinrichtung 4 vorgesehen. Mit dieser werden Gummiteile 5 in die Gummireaktivierungsmühle 2 eingeführt. Die Materialzuführungseinrichtung 4 kann beispielsweise eine Bandfördereinrichtung, ein Einfülltrichter, ein Schneckenförderer oder eine sonstige Fördereinrichtung sein. Die Gummiteile 5 sind z.B. im Reifenrecycling anfallende Gummistücke. Diese können durch Abschälen von Altreifen gewonnen sein. In diesem Fall sind sie weitgehend frei von Fasern oder sonstigen Störstoffen. Es kann sich auch um Teile von Reifenkarkassen handeln, die eine Gewebearmierung enthalten.

Die Gummireaktivierungsmühle 2 gibt an seinem Ausgang 6 ein zumindest teilweise reaktiviertes Produkt aus, das in eine nachfolgende Prozessstufe 7 (z.B. in Gestalt einer Siebeinrichtung, eines Windsichters oder einer sonstigen Klassiereinrichtung) geführt wird. Das Produkt liegt in Form von aktivem Pulver vor.

Die Prozessstufe 7 führt zumindest gröbere Bestandteile des an den Ausgang 6 abgegebenen Materials in einem Teilstrom 8 zu dem Eingang 3 der Gummireaktivierungsmühle 2 zurück. Das Material wird mit zunehmender Anzahl von Kalanderdurchläufen zunehmend aktiv. Es wird dabei eine zu starke Erwärmung des Materials z.B. durch periodische oder kontinuierliche Kühlung verhindert. Es kann von einer Kaltaktivierung ohne Zusatzstoffe gesprochen werden.

Ein anderer Teilstrom 9 wird als fertiges Produkt ausgegeben. Der Teilstrom 9 besteht aus Teilen, die einen gewünschten Zerkleinerungsgrad und/oder einen gewünschten Reaktivierungsgrad erreicht haben. Es kann sich vorzugsweise um Pulver oder Flocken, aber auch um Fetzen oder auch mattenartige plastifizierte Teile handeln.

In den Figuren 2 und 3 ist der Reaktivierungsprozess, wie er in der Gummireaktivierungsmühle 2 durchgeführt wird, schematisch veranschaulicht. Bei dem Gummiteil 5 handelt es sich um einen stückigen Gegenstand, dessen Länge, Breite und Höhe jeweils wenige bis mehrere Zentimeter betragen kann. Er kann gegebenenfalls auch kleiner sein. In der Gummi-Reaktivierungsmühle 2 wird dieses Gummiteil 5 durch einen sehr engen, zwischen zwei Walzen 10, 11 ausgebildeten Spalt 12 geführt. Dabei erfährt es eine derartig hohe Deformation, dass es zu allenfalls noch lose zusammenhängenden kleinen Teilen 13, 14, 15 zerquetscht wird. Fig. 3 veranschaulicht das entstandene Gummikorn 15. Durch das Zerreißen des Gummimaterials ist die Oberfläche des Gummikorns 15 unregelmäßig geformt. Innerhalb des Gummikorns 15 finden sich zahlreiche Risse 16, 17. Sowohl entlang der Oberfläche des Gummikorns 15 als auch an den Rissen 16, 17 sind die Schwefelbrückenbindungen aufgerissen. Es ist eine mechanische Devulkanisierung eingetreten. Diese Unterbrechungen der C-S-C-Brücken treten auch dort auf, wo Risse 16, 17 im eigentlichen Sinne kaum sichtbar sind.

Die Gummireaktivierungsmühle 2 ist in Fig. 4 gesondert veranschaulicht. Seine beiden Walzen 10, 11 sind mit zueinander parallelen Drehachsen 18, 19 in einem Gestell 20 drehbar gelagert. Zur Drehung der beiden Walzen 10, 11 dient eine Antriebseinrichtung 21, zu der im vorliegenden Ausführungsbeispiel 2 voneinander unabhängig ansteuerbare Antriebsmaschinen 22, 23 gehören. Die Antriebsmaschinen 22, 23 können Elektromotoren, Elektro-Getriebemotoren, Hydraulikmotoren oder dergleichen sein.

Die Walzen 10, 11 haben im vorliegenden Ausführungsbeispiel den gleichen Durchmesser. Der Durchmesser ist vorzugsweise größer als die Abmessungen der zu verarbeitenden Gummiteile 5. Die Durchmesser der beiden Walzen 10, 11 können auch unterschiedlich bemessen sein. Vorzugsweise übersteigt die axiale Länge der Walze 10 und 11 ihren Durchmesser. Die Walzen 10, 11 sind vorzugsweise beide hohl ausgebildet.

Die Walze 11 ist in dem Gestell 20 durch Lager 24, 25 drehbar gelagert, die in dem Gestell 20 ortsfest angeordnet sind. Die Walze 10 ist in Lagern 26, 27 drehbar gelagert, die in verschiebbaren Lageraufnahmen 28, 29 sitzen. Die Lager 24 bis 27 sind geeignete ein- oder mehrreihige Wälzlager. Die Lageraufnahmen 28, 29 sind bezüglich der Walze 11 radial verschiebbar gelagert. Auf diese Weise kann die Walze 10 von der Walze 11 weg und auf diese zu bewegt werden. Der mögliche Hub kann auf wenige Millimeter begrenzt sein.

Den beiden Lageraufnahmen 28, 29 sind Federmittel 30, 31 zugeordnet. Diese dienen dazu, einer die Walzen 10, 11 auseinander drängenden Kraft eine entsprechend hohe Gegenkraft entgegenzusetzen. Die Federmittel 30, 31 können beispielsweise Pneumatikzylinder, Hydraulikzylinder, Hebelgestänge mit Zugmagneten oder dergleichen sein. Als Federmittel kommen auch einfache mechanische Federn, wie Blattfederpakete, Druckfedern, Schraubenfedern oder dergleichen in Frage. Im vorliegenden Ausführungsbeispiel handelt es sich bei den Federmitteln 30, 31 um Tellerfederpakete 32, 33, die auf der von der Walze 11 weg liegenden Seite auf die Lageraufnahmen 28, 29 einwirken.

Den Federmitteln 30, 31 gegenüberliegend ist vorzugsweise jeder Lageraufnahme 28, 29 ein Hubbegrenzungsmittel 34, 35 zugeordnet. Das Hubbegrenzungsmittel 34, 35 dient dazu zu verhindern, dass das Federmittel 30, 31 den Mantel der Walze 10 (zu fest) an den Mantel der Walze 11 anpresst. Im vorliegenden Ausführungsbeispiel dient ein verstellbarer Anschlag z.B. in Gestalt von Einstellschrauben 36, 37 als Hubbegrenzungsmittel. Die Tellerfederpakete 32, 33 pressen die Lageraufnahmen 28, 29 gegen die Stirnseiten der Begrenzungsschrauben 36, 37. Diese sind z.B. so eingestellt, dass zwischen den beiden Walzen 10, 11 ein Spalt von 0 mm (d.h. allenfalls wenigen hundertstel Millimetern) verbleibt.

Die hohl ausgebildeten Walzen 10, 11 haben vorzugsweise eine harte Oberflächenschicht 38, wie sie aus Fig. 5 am Beispiel der Walze 11 ersichtlich ist. Die Oberflächenschicht 38 ist beispielsweise eine aufgeschweißte oder aufgespritzte Stahlschicht. Die Schicht ist nicht ideal eben sondern enthält vielmehr, wie in Fig. 5 schematisch angedeutet, einzelne Erhebungen 39 und Vertiefungen 40. Diese Erhebungen 39 und 40 sind vorzugsweise nicht scharfkantig sondern gerundet. Sie können eine unregelmäßige oder auch nach regelmäßigem Muster vorgegebene Struktur bilden. Die axiale (in Richtung der Achse 19) zu messende und in Umfangsrichtung jeder Walze 10, 11 zu messende Ausdehnung der Erhebungen 39 und der Vertiefungen 40 liegt vorzugsweise im Bereich oberhalb von 1/10 mm, z.B. im Bereich weniger Millimeter. Die Erhebungen 39 und Vertiefungen 40 können durch Schweißraupen und Zwischen den Schweißraupen in den Überlappungszonen derselben auftretenden flachen Gräben oder Dellen bestehen. Die Oberflächenschicht kann ein genarbtes Aussehen haben.

Wie in Fig. 4 bei dem Lager 24 schematisch angedeutet, unterliegt die Gummireaktivierungsmühle 2 einer Kühlung. Diese kann beispielsweise dadurch bewirkt werden, dass ein Kühlfluid in zumindest eine der beiden Walzen 10, 11 oder auch in beide Walzen 10, 11 eingeführt und aus diesen auch wieder herausgeführt wird. Dazu kann ein Wellenstummel 41, 42 jeder Walze 10, 11 hohl gebohrt und mit einer nicht weiter veranschaulichten Fluidzuführungs- oder Abführungseinrichtung verbunden sein. Als Kühlfluid kommt Wasser in Frage.

Die insoweit beschriebene Gummireaktivierungsmühle 2 arbeitet wie folgt:
Im Betrieb werden die beiden Antriebsmaschinen 22, 23 so angesteuert, dass die Walzen 10, 11 vorzugsweise gegensinnig drehen. Dadurch haben beide Walzen 10, 11 an dem Spalt 12 die gleiche Förderrichtung. Vorzugsweise drehen die beiden Walzen 10, 11 mit unterschiedlichen Drehzahlen. Im vorliegenden Ausführungsbeispiel wird ein Drehzahlverhältnis von 5:30 bevorzugt. Beispielsweise läuft die obere Walze 10 mit sechsfacher Drehzahl der unteren Walze 11. Die Anordnung kann auch umgekehrt getroffen sein. Werden Gummiteile 5 an die Walzen 10, 11 herangeführt, werden sie von den Walzen erfasst und in den Spalt 12 gezogen. Eine Anpressvorrichtung kann vorgesehen werden, um diesen Vorgang zu unterstützen.

Die Tellerfederpakete 32, 33 oder sonstige Federmittel 30, 31 verhindern, dass die Walzen 10, 11 sich nennenswert voneinander entfernen. Es bleibt eine enge Spaltweite von allenfalls wenigen zehntel Millimetern bestehen. Das Gummimaterial 5 wird unter hohem Quetschdruck durch diesen engen Spalt gefördert und unterliegt dabei einer derart großen Verformung, dass es in viele kleine Teilchen, d.h. die Gummikörner 13 bis 15 oder zu einer Mattenform zerlegt und weiter innerlich aufgerieben wird. Das den Spalt 12 verlassende Produkt besteht zum großen Teil aus zerkleinerten, zerquetschten oder zerriebenen Gummipartikeln, die schon aktiviert sind. Ein weiterer Teil verlässt den Spalt 12 als zerrissene lockere Matte. Die Prozessstufe 7 kann Feinkorn ausscheiden und Grobkorn rückführen, so dass dieses die Gummireaktivierungsmühle 2 zwei- oder mehrfach durchläuft. Dies kann kontinuierlich geschehen.

Es ist auch möglich, die Gummireaktivierungsmühle 2 auf chargenweisen Betrieb einzurichten. Dazu arbeitet die Prozessstufe 7 als Weiche. Sie gibt das an dem Ausgang 6 abgegebene Produkt als Teilstrom 8 vollständig an den Eingang 3 zurück. Ist das Produkt nach vorzugsweise mehreren Durchläufen z.B. zu feinem Mehl umgeformt, wird es von der Prozessstufe als Materialstrom 9 ausgegeben. Die Gummireaktivierungsmühle 2 ist dann zur Verarbeitung der nächsten Materialcharge bereit.

Das Gummireaktivierungsverfahren arbeitet trocken und frei von chemischen Reaktivierungsmitteln. Das Gummimaterial wird auf rein mechanische Weise reaktivert. Es wird ein qualitativ hochwertiges Produkt erhalten, das zur Neuherstellung von Gummiteilen, insbesondere ohne Anwendung von Klebstoffen verwendet werden kann. Es ist wieder vulkanisierungsfähig.

Das erfindungsgemäße Mahlverfahren dient der Reaktivierung von Gummi ohne chemische Zusatzstoffe. Das zu reaktivierende Gummi wird durch einen engen Walzspalt geführt. Die Walzen laufen vorzugsweise mit unterschiedlichen Drehzahlen und haben eine raue oder genarbte Oberfläche. Es entstehen aufgeschlissene Gummipartikel mit sehr vielen aufgebrochenen C-S-C-Bindungen, die thermisch reaktivierbar sind. Das so erhalte Recyclingmaterial eignet sich zum Ersatz von frischem Kautschuk.

### Bezugszeichen:

- 1: Gummirecyclingeinrichtung
- 2: Gummi-Reaktivierungsmühle
- 3: Eingang
- 4: Material-Zuführungseinrichtung
- 5: Gummiteile
- 6: Ausgang
- 7: Prozessstufe
- 8, 9: Teilstrom
- 10, 11: Walzen
- 12: Spalt
- 13 - 15: Gummiteilchen - Gummikorn
- 16, 17: Risse
- 18, 19: Drehachsen
- 20: Gestell
- 21: Antriebseinrichtung
- 22, 23: Antriebsmaschinen
- 24 - 27: Lager
- 28, 29: Lageraufnahmen
- 30, 31: Federmittel
- 32, 33: Tellerfederpakete
- 34, 35: Hubbegrenzungsmittel
- 36, 37: Einstellschrauben
- 38: Schicht
- 39: Erhebungen
- 40: Vertiefungen

## Patentansprüche

1. Gummi-Reaktivierungsmühle (2),
mit einer zur Zufuhr von Gummiteilen (5) eingerichteten Materialzuführvorrichtung (4),
mit zwei rotierenden in einem Gestell (2) mittels Lager (24 - 27) drehbar gelagerten Walzen (10, 11), von denen wenigstens eine (10) durch eine Antriebseinrichtung (21) drehend angetrieben ist und mit der anderen Walze (11) ohne Materialdurchlauf in Berührung steht,
wobei zumindest eine der beiden Walzen (10, 11) eine raue oder genarbte Oberfläche aufweist, indem wenigstens eine der Walzen (10, 11) eine Oberfläche mit Erhebungen (39) und Vertiefungen (40) aufweist, die größer als 1/10 mm sind,
**dadurch gekennzeichnet, dass** die Lager (26, 27) der betreffenden Walze (10) auf die andere Walze (11) hin und von dieser weg verschiebbar gelagert sind,
mit einer Druckfeder pro Lager (26, 27), die das jeweilige Lager (26, 27) jeweils gegen einen Anschlag (34, 35) vorspannt, wobei die Walzen (10, 11) auf einen Walzenabstand von 0 mm eingestellt sind, so dass die Walzen (10, 11) bei fehlender Materialzufuhr ohne Vorspannung aneinander wenigstens punktuell anliegen oder einen ganz engen Spalt von z.B. wenigen 1/100 mm oder wenigen 1/10 mm miteinander festlegen.

2. Gummi-Reaktivierungsmühle nach Anspruch 1, **dadurch gekennzeichnet, dass** die Antriebseinrichtung (21) beide Walzen (10, 11) drehend antreibt.

3. Gummi-Reaktivierungsmühle nach Anspruch 1, **dadurch gekennzeichnet, dass** die beiden Walzen (10, 11) unterschiedliche Umfangsgeschwindigkeiten aufweisen.

4. Gummi-Reaktivierungsmühle nach Anspruch 1, **dadurch gekennzeichnet, dass** die Erhebungen (39) und Vertiefungen (40) kleiner als 1 mm sind.

5. Gummi-Reaktivierungsmühle nach Anspruch 1, **dadurch gekennzeichnet, dass** die Erhebungen (39) und Vertiefungen (40) eine gerundete Form aufweisen.

6. Gummi-Reaktivierungsmühle nach Anspruch 1, **dadurch gekennzeichnet, dass** die Materialzuführungseinrichtung (4) mit einer Materialrückführungseinrichtung (7) verbunden ist.

7. Gummi-Reaktivierungsmühle nach Anspruch 1, **dadurch gekennzeichnet, dass** wenigstens eine der Walzen (10, 11) mit einer Kühleinrichtung verbunden ist.

8. Gummi-Reaktivierungsverfahren, bei dem einer Gummi-Reaktivierungsmühle nach Anspruch 1:
stückige Gummiteile (5) trocken zugeführt werden,
die Gummiteile (5) Scherspannungen ausgesetzt werden, um die stückigen Gummiteile (5) in einem Walzspalt (12) zu Gummikorn (13, 14, 15) zerkleinern und um in den entstehenden Gummikorn (13, 14, 15) zahlreiche Risse zu erzeugen, wobei die Weite des Walzspalts (12) durch ein Gleichgewicht einer die Walzen (10, 11) aufeinander zu spannenden Kraft und der von dem Gummimaterial aufgenommenen Kraft festgelegt wird.

9. Gummi-Reaktivierungsverfahren nach Anspruch 8, **dadurch gekennzeichnet, dass** die Gummiteile (5) Reifenteile von Fahrzeugreifen sind.

10. Gummi-Reaktivierungsverfahren nach Anspruch 8, **dadurch gekennzeichnet, dass** das Gummikorn (13, 14, 15) mehrfach kalandriert wird.

11. Gummi-Reaktivierungsverfahren nach Anspruch 10, **dadurch gekennzeichnet, dass** das Gummikorn (13, 14, 15) zusammen mit Gummiteilen (5) kalandriert wird.

12. Gummi-Reaktivierungsverfahren nach Anspruch 8, **dadurch gekennzeichnet, dass** das Gummikorn (13, 14, 15) während oder unmittelbar nach der Zerkleinerung gekühlt wird.

## Claims

1. Rubber reactivation mill (2),
with a material feed device (4) fitted for feeding rubber parts (5),
with two rotating rolls (10, 11) rotatably mounted in a frame (2) by means of bearings (24-27), at least one (10) of which rolls is driven to rotate by means of a drive device (21) and stands in contact with the other roll (11) without material passing through, wherein at least one of the two rolls (10, 11) has a rough or scored surface in that at least one of the rolls (10, 11) has a surface with raised sections (39) and depressions (40) that are larger than 1/10 mm,
**characterised in that** the bearings (26, 27) of the respective roll (10) are mounted to be displaceable towards and away from the other roll (11),
with one compression spring per bearing (26, 27), which prestresses the respective bearing (26, 27) against a respective stop (34, 35), wherein the rolls (10, 11) are set to a roll spacing of 0 mm, so that in the absence of material feed the rolls (10, 11) abut against one another without prestress at least at some points or together define a very narrow gap of e.g. few 1/100 mm or few 1/10 mm.

2. Rubber reactivation mill according to claim 1, **characterised in that** the drive device (21) drives both rolls (10, 11) to rotate.

3. Rubber reactivation mill according to claim 1, **characterised in that** the two rolls (10, 11) have different circumferential speeds.

4. Rubber reactivation mill according to claim 1, **characterised in that** the raised sections (39) and depressions (40) are smaller than 1 mm.

5. Rubber reactivation mill according to claim 1, **characterised in that** the raised sections (39) and depressions (40) have a rounded shape.

6. Rubber reactivation mill according to claim 1, **characterised in that** the material feed device (4) is connected to a material recirculation device (7).

7. Rubber reactivation mill according to claim 1, **characterised in that** at least one of the rolls (10, 11) is connected to a cooling device.

8. Rubber reactivation process, in which
rubber part lumps (5) are fed dry to a rubber reactivation mill according to claim 1, the rubber parts (5) are subjected to shear stresses in order to crush the rubber part lumps (5) into rubber grain (13, 14, 15) in a roll gap (12) and to generate numerous cracks in the rubber grain (13, 14, 15) formed,
wherein the width of the roll gap (12) is defined by an equilibrium of a force clamping the rolls (10, 11) onto one another and the force absorbed by the rubber material.

9. Rubber reactivation process according to claim 8, **characterised in that** the rubber parts (5) are tyre parts of motor vehicle tyres.

10. Rubber reactivation process according to claim 8, **characterised in that** the rubber grain (13, 14, 15) is calendered multiple times.

11. Rubber reactivation process according to claim 10, **characterised in that** the rubber grain (13, 14, 15) is calendered together with rubber parts (5).

12. Rubber reactivation process according to claim 8, **characterised in that** the rubber grain (13, 14, 15) is cooled during or directly after the crushing operation.

## Revendications

1. Broyeur de réactivation de caoutchouc (2),
comprenant un dispositif d'amenée de matière (4), agencé pour acheminer des éléments de caoutchouc (5),
comprenant deux cylindres (10, 11) tournants qui sont montés avec possibilité de rotation dans un bâti (2), au moyen de paliers (24 - 27), et dont au moins un (10) est entraîné en rotation par un dispositif d'entraînement (21) et est en contact avec l'autre cylindre (11) lorsqu'il n'y a pas de passage de matière,
au moins l'un des deux cylindres (10, 11) présentant une surface rugueuse ou grainée, du fait qu'au moins un des cylindres (10, 11) présente une surface dotée de bossages (39) et de creux (40) d'une dimension supérieure à 1/10 mm,
**caractérisé en ce que** les paliers (26, 27) du cylindre (10) concerné sont montés avec possibilité de déplacement en direction de l'autre cylindre (11) et dans la direction opposée,
comprenant un ressort de pression pour chaque palier (26, 27), qui met le palier (26, 27) concerné sous précontrainte respectivement contre une butée (34, 35), les cylindres (10, 11) étant réglés à un écartement entre cylindres de 0 mm, de sorte qu'en l'absence d'amenée de matière les cylindres (10, 11) sont appliqués au moins ponctuellement l'un contre l'autre, sans précontrainte, ou définissent entre eux un interstice très étroit de par exemple quelques 1/100 mm ou de quelques 1/10 mm.

2. Broyeur de réactivation de caoutchouc selon la revendication 1, **caractérisé en ce que** le dispositif d'entraînement (21) entraîne en rotation les deux cylindres (10, 11).

3. Broyeur de réactivation de caoutchouc selon la revendication 1, **caractérisé en ce que** les deux cylindres (10, 11) présentent des vitesses périphériques différentes.

4. Broyeur de réactivation de caoutchouc selon la revendication 1, **caractérisé en ce que** les bossages (39) et les creux (40) sont de dimension inférieure à 1 mm.

5. Broyeur de réactivation de caoutchouc selon la revendication 1, **caractérisé en ce que** les bossages (39) et les creux (40) présentent une forme arrondie.

6. Broyeur de réactivation de caoutchouc selon la revendication 1, **caractérisé en ce que** le dispositif d'amenée de matière (4) est relié à un dispositif de retour de matière (7).

7. Broyeur de réactivation de caoutchouc selon la revendication 1, **caractérisé en ce qu'**au moins un des cylindres (10, 11) est relié à un dispositif de refroidissement.

8. Procédé de réactivation de caoutchouc, selon lequel :
on amène des éléments de caoutchouc (5) secs en morceaux à un broyeur de réactivation de caoutchouc selon la revendication 1,
les éléments de caoutchouc (5) sont soumis à des contraintes de cisaillement afin de broyer les éléments de caoutchouc (5) en morceaux dans un interstice entre cylindres (12) pour obtenir des grains de caoutchouc (13, 14, 15) et pour provoquer de nombreuses fissures dans les grains de caoutchouc (13, 14, 15) formés,
sachant que la largeur de l'interstice entre cylindres (12) est définie par un équilibre entre une force mettant les cylindres (10, 11) sous précontrainte l'un en direction de l'autre et la force absorbée par le matériau de caoutchouc.

9. Procédé de réactivation de caoutchouc selon la revendication 8, **caractérisé en ce que** les éléments de caoutchouc (5) sont des éléments de pneus provenant de pneus de véhicules.

10. Procédé de réactivation de caoutchouc selon la revendication 8, **caractérisé en ce que** les grains de caoutchouc (13, 14, 15) sont soumis à des calandrages multiples.

11. Procédé de réactivation de caoutchouc selon la revendication 10, **caractérisé en ce que** les grains de caoutchouc (13, 14, 15) sont calandrés conjointement avec des éléments de caoutchouc (5).

12. Procédé de réactivation de caoutchouc selon la revendication 8, **caractérisé en ce que** les grains de caoutchouc (13, 14, 15) sont refroidis pendant le broyage ou immédiatement après.
